(19) Europäisches Patentamt
European Patent Office
Office européen des brevets

(11) **EP 4 453 693 B1**

(12) **FASCICULE DE BREVET EUROPEEN**

(45) Date de publication et mention de la délivrance du brevet:
**01.04.2026 Bulletin 2026/14**

(21) Numéro de dépôt: **22835451.0**

(22) Date de dépôt: **16.12.2022**

(51) Classification Internationale des Brevets (IPC):
**G06F 3/01** *(2006.01)* **G02B 27/01** *(2006.01)*
**H04B 10/114** *(2013.01)* **H04B 10/116** *(2013.01)*

(52) Classification Coopérative des Brevets (CPC):
**G06F 3/011; G06F 3/012; H04B 10/1143; H04B 10/1149**

(86) Numéro de dépôt international:
**PCT/EP2022/086509**

(87) Numéro de publication internationale:
**WO 2023/117814 (29.06.2023 Gazette 2023/26)**

(54) **PROCÉDÉ ET SYSTÈME DE TRANSMISSION OPTIQUE ENTRE UN PREMIER ÉQUIPEMENT ET UN DEUXIÈME ÉQUIPEMENT AVEC DÉTERMINATION DE LA LOCALISATION DU DEUXIÈME ÉQUIPEMENT**

VERFAHREN UND SYSTEM ZUR OPTISCHEN ÜBERTRAGUNG ZWISCHEN ERSTEN UND ZWEITEN VORRICHTUNGEN MIT BESTIMMUNG DER POSITION DER ZWEITEN VORRICHTUNG

METHOD AND SYSTEM FOR OPTICAL TRANSMISSION BETWEEN FIRST AND SECOND DEVICES WITH DETERMINATION OF THE LOCATION OF THE SECOND DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.12.2021 FR 2114219**

(43) Date de publication de la demande:
**30.10.2024 Bulletin 2024/44**

(73) Titulaire: **Orange**
**92130 Issy-les-Moulineaux (FR)**

(72) Inventeurs:
• **BOUCHET, Olivier**
  **92326 Chatillon (FR)**
• **JAHAN, Bruno**
  **92326 Chatillon (FR)**

(56) Documents cités:
**FR-A1- 3 081 639**

• **SINGH RAVINDER ET AL: "Design and Characterisation of Terabit/s Capable Compact Localisation and Beam-Steering Terminals for Fiber-Wireless-Fiber Links", JOURNAL OF LIGHTWAVE TECHNOLOGY, IEEE, USA, vol. 38, no. 24, 8 September 2020 (2020-09-08), pages 6817 - 6826, XP011821977, ISSN: 0733-8724, [retrieved on 20201123], DOI: 10.1109/ JLT.2020.3022754**

## Description

### Domaine de l'invention

La présente invention se rapporte au domaine des télécommunications. Au sein de ce domaine, l'invention se rapporte plus particulièrement aux procédés de transmission optique de données d'un premier équipement de télécommunication vers un deuxième équipement. Elle s'applique notamment aux dispositifs de réalité virtuelle. Dans ce contexte, l'invention permet d'obtenir la position d'un ou de plusieurs utilisateurs répartis dans un environnement qui vont être utilisées pour interagir avec un contenu de réalité virtuelle.

### Art antérieur

Est connu : un système de communication optique de données comprenant au moins un point d'accès et un casque optique. Le point d'accès comprend :

- une fibre optique transportant un rayon lumineux,
- un miroir amovible,
- un microprocesseur pour piloter l'orientation du miroir selon des angles d'inclinaison verticale et horizontale pour diriger le rayon lumineux en sortie de la fibre optique dans une première direction,
- une matrice photoréceptrice pour recevoir un flux lumineux provenant d'une source émettrice associée au casque et pour déterminer une première direction de réception.

Le casque optique comprend :

- une fibre optique transportant un rayon lumineux,
- un miroir amovible,
- un microprocesseur pour piloter l'orientation du miroir selon des angles d'inclinaison verticale et horizontale pour diriger le rayon lumineux en sortie de la fibre optique dans une deuxième direction,
- une matrice photoréceptrice pour recevoir un flux lumineux provenant d'une source émettrice associée au point d'accès et pour déterminer une deuxième direction de réception.

Un tel système est par exemple décrit dans le document de Singh Ravinder et Al. « Design and Characterisation of Terabit/s Capable Compact Localisation and Beam-Steering Terminals for Fiber-Wireless-Fiber Links", Journal of Lightwave Technology, 2020-09-08, IEEE, USA. Le microprocesseur du point d'accès est programmé pour aligner la première direction avec la première direction de réception. Le microprocesseur du casque est programmé pour aligner la deuxième direction avec la deuxième direction de réception.

La demande de brevet FR3081639A1 décrit un procédé de transmission optique de données pour des applications de réalité virtuelle dans lequel la localisation d'un équipement utilisateur est donnée par la localisation du point d'accès sous lequel il se trouve.

Dans un contexte de réalité virtuelle, les données de réalité virtuelle sont transmises par le point d'accès vers le casque. Une telle utilisation nécessite un débit très important de transmission de données. Pour que l'utilisateur bénéficie d'une immersion totale, il ne doit pas percevoir d'interruption lors de ses déplacements ; la communication doit donc être maintenue même en cas de basculement d'un point d'accès à un autre point d'accès. En outre, lorsque plusieurs utilisateurs sont répartis dans un espace fermé avec plusieurs points d'accès, ils doivent pouvoir chacun bénéficier d'un même ressenti avec une immersion totale.

### Exposé de l'invention

L'invention propose un procédé de communication ayant pour objectif d'améliorer le ressenti d'immersion de l'utilisateur du deuxième équipement, par exemple un casque.

L'invention a pour objet un procédé de communication optique de données entre un premier équipement de télécommunication, tel que défini par la revendication 1.

Des modes de réalisation préférés sont définis par les revendications dépendantes 2 à 13.

L'invention a en outre pour objet un équipement de télécommunication destiné à communiquer avec un deuxième équipement, tel que défini par la revendication 14.

L'invention a en outre pour objet un système de communication optique de données comprenant un premier équipement de télécommunication dont la localisation est connue et un deuxième équipement de télécommunication, tel que défini par la revendication 15.

## Liste des figures

D'autres caractéristiques et avantages de l'invention apparaîtront plus clairement à la lecture de la description suivante de modes de réalisation, donnés à titre de simples exemples illustratifs et non limitatifs, et des dessins annexés, parmi lesquels :

[Fig.1] La [Fig.1] est un schéma d'un mode de réalisation d'un système selon l'invention,
[Fig.2] La [Fig.2] est un schéma d'un point d'accès AP et d'un casque UT du système de la [Fig.1] illustrant le principe de montage des parties optiques de chacun de ces équipements selon un mode de réalisation de l'invention,
[Fig.3] La [Fig.3] est un organigramme illustrant le processus d'appairage selon son déroulement côté casque,
[Fig.4] La [Fig.4] est un organigramme illustrant le processus d'appairage selon son déroulement côté point d'accès,
[Fig.5] La [Fig.5] est une vue schématique d'un hall dans lequel seul un point d'accès AP et un casque UT d'un système selon la [Fig.1] sont représentés.

## Description de modes de réalisation particuliers

Un premier principe général de l'invention repose sur la détermination de la position d'un équipement non fixe, par exemple un casque, connaissant la position du premier équipement avec lequel il est appairé, les angles d'orientation, par exemple Azimut et élévation, du miroir du premier équipement, par exemple un point d'accès, le flux de communication réfléchit par le miroir du premier équipement pointant dans la direction de l'équipement non fixe.

Un deuxième principe général de l'invention repose sur la distinction de plusieurs groupes d'identifiants attribués aux équipements du système et sur la transmission directive par un équipement de son identifiant, l'identifiant transmis pouvant être différent de son identifiant propre en fonction de son état libre ou pas. Un premier groupe comprend les identifiants propres aux casques. Un deuxième groupe comprend les identifiants propres aux points d'accès et un troisième groupe comprend les identifiants pour un état d'appairage en cours.

L'utilisation des trois groupes d'identifiants par le processus d'appairage permet à un casque de ne pas débuter un appairage avec un point d'accès déjà en cours d'appairage ou déjà appairé et d'identifier immédiatement les points d'accès libres.

La transmission directive de l'identifiant permet à un récepteur de cette transmission de pouvoir déterminer la direction d'arrivée de cette transmission.

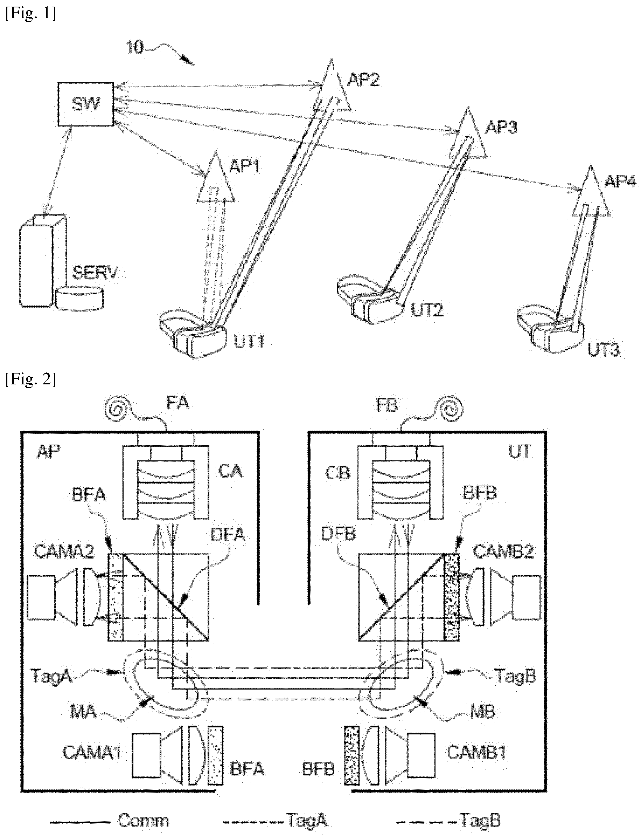

La [Fig.1] est un schéma d'un mode de réalisation d'un système selon l'invention.

Le système comprend au moins un serveur SERV de contenu, un commutateur optique SW (optical switch), des points d'accès AP, AP1, ...AP4 dits premiers équipements et des casques utilisateurs UT, UT1,..., UT3, dits deuxièmes équipements. Selon un mode de réalisation, un procédé 10 de communication optique de données selon l'invention intervient entre un premier équipement de télécommunication AP, pris parmi les points d'accès AP1, ...AP4, dont la localisation est connue et un deuxième équipement UT de télécommunication pris parmi les casques utilisateurs UT1,..., UT3.

Les équipements AP et UT sont utilisés dans un environnement qui correspond selon une utilisation particulière à une salle délimitée par un plafond, un sol et des murs. Un certain nombre de points d'accès sont fixés au plafond. La position en X et Y de ces points d'accès selon un repère qui peut être cartésien et parallèle au plan du plafond est connue des casques et de chaque point d'accès. Un axe Z vertical peut être défini parallèle au plan d'un mur. La hauteur entre un point d'accès et le sol est connue des casques. Chaque point d'accès couvre une zone comprise dans l'espace délimité par les murs, le sol et le plafond. La hauteur du casque porté par un utilisateur est déterminée lorsque le casque est attribué à l'utilisateur soit connaissant la taille de l'utilisateur soit par exemple par un système de visée qui permet de mesurer la hauteur du casque porté par l'utilisateur par rapport au sol.

Le serveur est relié au commutateur optique via un lien haut débit. Chaque point d'accès est relié via une première fibre optique au commutateur optique. La première fibre optique qui arrive à un point d'accès, a son extrémité côté point d'accès interfacée avec un collimateur de manière à laisser cette extrémité libre orientée vers le sol et à transmettre dans l'air le flux optique avec éventuellement une légère divergence.

Chaque casque est équipé d'une deuxième fibre optique dont une extrémité est interfacée avec un collimateur de manière à laisser cette extrémité libre orientée vers le plafond lorsque le casque est porté par un utilisateur et à transmettre dans l'air le flux optique avec éventuellement une légère divergence.

Le signal de communication, selon le lien descendant, est transmis depuis le serveur jusqu'au casque via le commutateur optique, la première fibre optique et le point d'accès avec une transmission dans l'air d'un flux lumineux transportant ce signal entre le point d'accès et le casque, à une première longueur d'onde, par exemple 1550nm.

Le signal de communication, selon le lien montant, est émis par le casque et guidé par la deuxième fibre optique avec une transmission dans l'air d'un flux lumineux transportant ce signal entre le casque et le point d'accès à, éventuellement, une deuxième longueur d'onde puis une transmission jusqu'au serveur via la première fibre optique et le commutateur optique.

La [Fig.2] est un schéma d'un point d'accès AP et d'un casque UT illustrant le principe de montage des parties optiques de chacun de ces équipements selon un mode de réalisation de l'invention.

Chaque équipement AP, respectivement UT, comprend une fibre optique FA, respectivement FB, un collimateur optique CA, respectivement CB, deux caméras, une grossière CAMA1 et une fine CAMA2, respectivement CAMB1 et CAMB2, un miroir inclinable, MA, respectivement MB, un filtre passe bande optique BFA, respectivement BFB, un filtre dichroïque DFA, respectivement DFB, une couronne de LED, TagA, respectivement TagB.

Le filtre dichroïque DFA, respectivement DFB, permet de séparer deux types de flux optique. Ainsi un type de flux est transmis par le filtre alors que l'autre type de flux est réfléchit.

Le filtre passe bande optique BFA, respectivement BFB, permet d'éliminer des lumières résiduelles indésirables telles que celle provenant du soleil ou d'une lumière artificielle et de laisser passer les longueurs d'onde des signaux de communication transmis entre le point d'accès et le casque utilisateur.

La couronne de LED TagA, respectivement TagB est disposée autour du miroir MA, respectivement MB, solidaire de ce miroir. Cette couronne de LED est un émetteur directif.

La fibre optique FA du point d'accès a une première extrémité reliée au commutateur optique OC et une deuxième extrémité interfacée avec le collimateur CA. Le signal de communication (ou plan de données) est transporté par cette fibre optique FA et destiné au casque utilisateur UT.

La fibre optique FB du casque a une première extrémité reliée à une source optique non représentée (par exemple, un transceiver optique), et une deuxième extrémité interfacée avec le collimateur CB.

Ainsi, le collimateur CA, respectivement CB adapte si nécessaire le flux optique transmis par la fibre optique FA, respectivement FB en un faisceau parallèle, avec éventuellement une légère divergence, dans l'espace libre, typiquement l'air.

La transmission (par exemple d'un contenu virtuel) par la fibre optique FA, respectivement FB est bidirectionnelle. Dans le sens descendant, le flux optique provenant du commutateur optique est transmis dans l'air en sortie du collimateur CA, filtré par le filtre dichroïque DFA, réfléchit par le miroir MA puis par le miroir MB, filtré par le filtre dichroïque DFB, reçu par le collimateur CB, transmis par la fibre optique FB et affiché à l'utilisateur du casque UT. Dans le sens montant, le flux optique provenant du casque UT transmis dans l'air en sortie du collimateur CB, filtré par le filtre dichroïque DFB, réfléchit par le miroir MB puis par le miroir MA, filtré par le filtre dichroïque DFA, reçu par le collimateur CA, est transmis par la fibre optique FA jusqu'au commutateur.

La couronne de LED, TagA, respectivement TagB émet un flux lumineux à une certaine longueur d'onde $\lambda A$, respectivement $\lambda B$, typiquement dans de l'Infra Rouge. Les longueurs d'onde $\lambda A$, $\lambda B$ sont de préférence différentes ce qui permet de mieux les détecter et distinguer l'une par rapport à l'autre, par exemple respectivement 800nm et 890 nm. Ces longueurs d'onde sont par ailleurs très différentes des longueurs d'onde des flux optiques transmis par les fibres optiques FA et FB (1577 et 1270 nm par exemple). Les longueurs d'onde $\lambda A$, $\lambda B$ sont traitées par les filtres passe-bande BFA et BFB dont le gabarit inclut les longueurs d'onde $\lambda A$, $\lambda B$.

Le flux lumineux émit par la couronne de LED, TagA, respectivement TagB, est directif et est réfléchit par le miroir MB, respectivement MA, réfléchi par le filtre dichroïque DFB, respectivement DFA, filtré par le filtre BFB, respectivement BFA, puis détecté par la caméra grossière CAMB1 et par la caméra fine CAMB2, respectivement par CAMA1 et par CAMA2.

La caméra grossière CAMA1, respectivement CAMB1, a un large champ de vision. La caméra fine CAMA2, respectivement CAMB2, a un champ de vision étroit plus précis que celui de la caméra grossière CAMA1, respectivement CAMB1.

L'association des deux caméras grossières et des deux caméras fines défini un système de localisation et de suivi (tracking) soit d'un point d'accès, soit d'un casque utilisateur. La caméra grossière CAMA1, respectivement CAMB1 permet de localiser grossièrement un casque utilisateur, respectivement un point d'accès et ainsi de déterminer les angles de rotation vertical et horizontal à appliquer au miroir MB, respectivement MA, avec une précision dite grossière comme détaillé plus loin, ces angles sont dits grossiers. Après rotations du miroir MB, respectivement MA, selon les deux axes, des valeurs des angles grossiers précédemment déterminés, la caméra fine CAMA2, respectivement CAMB2 permet de localiser finement un casque utilisateur, respectivement un point d'accès et ainsi de déterminer les angles dits fins de rotation à appliquer au miroir MB, respectivement MA, avec une précision dite fine comme détaillé plus loin. La rotation des miroirs permet de suivre le déplacement du casque de sorte que la perte de puissance reçue dû à un mauvais alignement des faisceaux optiques avec les collimateurs soit faible. Ainsi, après la rotation fine il est aisé de déterminer les angles selon la verticale dit élévation et selon l'horizontal dit azimut correspondant aux angles de rotation résultants, grossiers plus fins, dont le miroir a globalement tourné.

Le miroir local, MA, respectivement MB, en coopération avec le miroir distant MB respectivement MA permet de réfléchir et d'orienter le flux optique montant, respectivement descendant dans la direction du collimateur CA, respectivement CB.

Un moteur de rotation selon deux axes du miroir MA, respectivement MB, permet de pivoter ce miroir selon un angle d'azimut et un angle d'élévation pour orienter le flux optique dans la direction voulue. Ce moteur est piloté par un microcalculateur ou microprocesseur non représenté.

Le pointage du flux optique dans la direction d'un collimateur peut se dérouler en deux étapes.

Dans une première étape, la caméra grossière CAMB1, respectivement CAMA1, détecte le flux lumineux provenant de la couronne de LED TagA, respectivement TagB, d'un point d'accès AP, respectivement d'un casque utilisateur UT. Le microcalculateur en association avec cette caméra grossière détermine en fonction de la répartition de la puissance reçue sur la grille de photodétecteurs de cette caméra les angles grossiers de rotation, élévation et azimut, à appliquer au flux lumineux pour que la puissance reçue soit maximisée. Le microcalculateur détermine à partir de ces angles grossiers de rotation les consignes d'angles à envoyer au moteur du miroir pour aligner ainsi grossièrement le flux lumineux reçu par le collimateur.

Dans une deuxième étape, la caméra fine CAMB2, respectivement CAMA2, détecte le flux lumineux provenant de la couronne de LED TagA, respectivement TagB, d'un point d'accès AP, respectivement d'un casque utilisateur UT. Le microcalculateur en association avec cette caméra fine détermine en fonction de la répartition de la puissance reçue sur la grille de photodétecteurs de cette caméra les angles fins de rotation, élévation et azimut, à appliquer au flux lumineux pour que la puissance reçue soit maximisée. Le microcalculateur détermine à partir de ces angles fins de rotation les consignes d'angles à envoyer au moteur du miroir pour aligner ainsi finement le flux lumineux reçu par le collimateur.

Les angles, azimut et élévation, du miroir MA, respectivement MB, permettent de connaître la direction du flux optique provenant du casque UT, respectivement du point d'accès AP.

Dans une position initiale, le miroir MA du point d'accès AP est sensiblement horizontal pour que le flux lumineux sortant de la fibre optique FA soit dirigé vers le sol.

Ainsi, un point d'accès AP sert un seul casque utilisateur UT à un instant donné. Toutefois en associant une technique d'accès multiple, telle que de la division en temps ou TDMA (Time Division Multiple Access), un point d'accès peut servir plusieurs utilisateurs simultanément avec un multiplexage en temps. D'autres techniques d'accès peuvent être utilisées telles que du CDMA (Code Division Multiple Access) ou du FDMA (Frequency Division Multiple Access).

Chaque équipement transmet un identifiant codé sur un certain nombre de bits à destination du ou des autres équipements en visibilité du flux lumineux émis via une transmission avec codage mise en œuvre par sa couronne de LED, TagA, respectivement TagB, pour un point d'accès AP, respectivement pour un casque utilisateur UT.

## Répartition et attribution des identifiants

En fonction du nombre de bits disponibles pour coder les identifiants, la table ci-après donne, pour un certain nombre de casques UT et de points d'accès AP, des exemples de mise en œuvre selon l'invention de répartition et d'attribution des identifiants. Selon l'invention, il est distingué plusieurs groupes d'identifiants, un pour les casques, un pour les points d'accès et un pour les différents couples possibles d'équipements en cours d'appairage (point d'accès AP-casque UT).

[table]

| Nbre de bits | | 5 | 7 | 9 | 11 | 13 |
|---|---|---|---|---|---|---|
| Nbre d'UT | | 2 | 10 | 20 | 35 | 16 |
| Nbre d'AP | | 10 | 10 | 23 | 55 | 480 |
| Groupe d'identifiants | UT ID | De 0 à 1 | De 0 à 9 | De 0 à 19 | De 0 à 34 | De 0 à 15 |
| | AP ID | De 2 à 11 | De 10 à 19 | De 20 à 42 | De 35 à 89 | De 16 à 495 |
| | Appairage ID | De 12 à 31 | De 20 à 119 | De 43 à 502 | De 90 à 2014 | De 496 à 8175 |

Ainsi, avec cinq bits (équivalent à 32 possibilités binaires), il est possible selon le tableau de répartir dix points d'accès et d'avoir deux casques utilisateurs simultanément dans le hall. Le groupe d'identifiants attribués aux casques comprend les valeurs entre zéro et un. Le groupe d'identifiants attribués aux points d'accès comprend les valeurs entre deux à onze. Le groupe d'identifiants attribués aux couples point d'accès-casque en cours d'appairage comprend les valeurs entre douze et trente et un. En effet, un identifiant d'appairage identifie exactement le couple d'équipements en cours d'appairage et il est celui transmis par les deux équipements tout le temps du processus d'appairage. Par exemple un identifiant égal à quatorze indique que le point d'accès deux est en cours d'appairage avec le casque zéro. L'émetteur de l'identifiant est commandé par le microcalculateur ou microprocesseur qui lui donne la valeur à transmettre.

Selon un mode de réalisation de l'invention, un équipement en mode de fonctionnement transmet en permanence un identifiant via la couronne de LED, TagA, TagB. Pour distinguer entre les bits binaires de l'identifiant, une modulation de type OOK (ON/OFF Keying) ou tout autre type de modulation peut être utilisée. Avec une modulation OOK, quand les LED sont éclairées il s'agit par exemple d'un un binaire, quand les LED sont éteintes il s'agit par exemple d'un zéro binaire. Cette transmission peut en outre s'effectuer selon un certain protocole avec un ou plusieurs bits de début (Start bit), un ou plusieurs bits d'arrêt (Stop bit).

Une mise en œuvre de l'invention est décrite ci-après dans le contexte d'un parc d'attraction qui propose à des utilisateurs de s'immerger dans de la réalité virtuelle. Le serveur de contenu contient un ou plusieurs scénarios de réalité virtuelle auxquels correspond un contenu tel un fichier vidéo destiné à être affiché sur un casque UT. De l'audio peut éventuellement être associé au contenu vidéo.

Cette immersion est offerte à un ou plusieurs utilisateurs simultanément dans un hall équipé de plusieurs points d'accès selon une configuration compatible des principes précédemment décrits.

Les points d'accès transmettent en permanence leur identifiant via leur couronne de LED. Un casque non attribué à un utilisateur est en mode veille (idle).

Lors de l'attribution d'un casque à l'utilisateur, il est déterminé la hauteur du casque porté par l'utilisateur depuis le sol. Cette hauteur peut alors être fournie au casque et aux points d'accès via par exemple une communication sans fil entre les équipements et un système de pilotage hébergé dans un ordinateur comprenant une interface de saisie des données. Selon une alternative, le système de pilotage peut permettre de configurer un espace de mémorisation amovible insérable dans le casque.

Si plusieurs scénarios sont proposés, l'utilisateur fait le choix d'un scénario parmi les différents scénarios. Cette sélection peut être saisie via le système de pilotage et fournie aux points d'accès et au casque.

Le casque bascule ou est basculé en mode de fonctionnement par exemple dès qu'il est attribué à l'utilisateur ou lorsque l'utilisateur coiffé de son casque pénètre dans le hall, la couronne de LED, TagB, transmet alors l'identifiant du casque.

Processus d'appairage

La communication entre un casque et un point d'accès nécessite un appairage entre ces deux équipements. Le processus d'appairage est terminé lorsque le casque et le point d'accès « échangent » leur identifiant : l'identifiant transmis par le casque est celui attribué au point d'accès (identifiant propre) et l'identifiant transmis par le point d'accès est celui attribué au casque (identifiant propre).

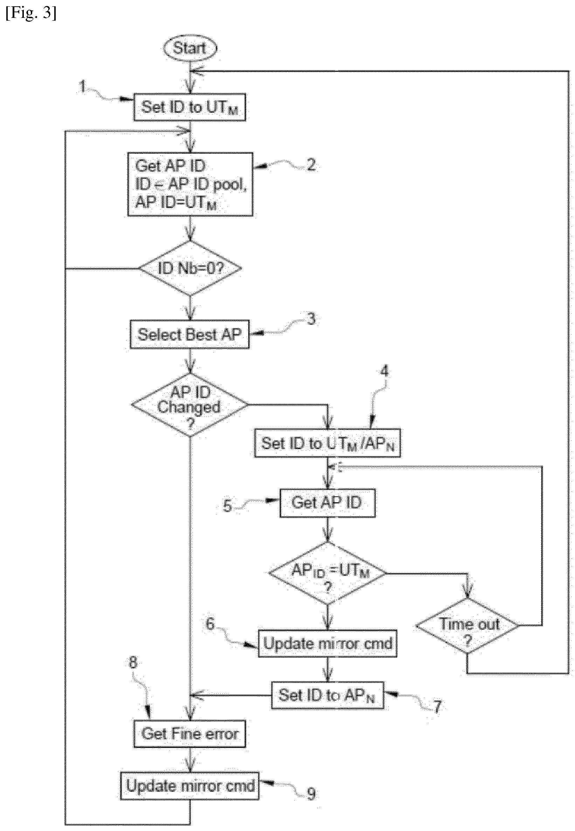

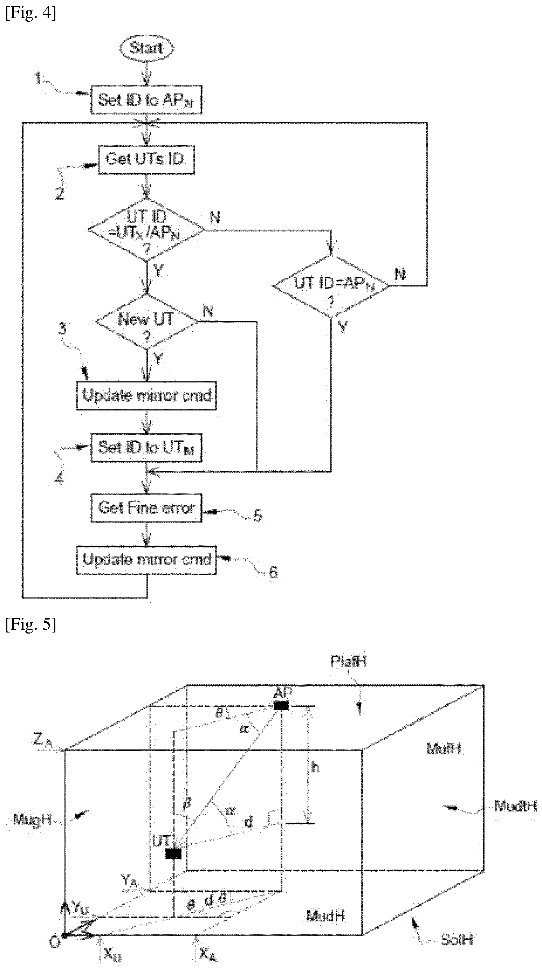

Le processus d'appairage est illustré par l'organigramme de la [Fig.3] pour le déroulement côté casque et par l'organigramme de la [Fig.4] pour le déroulement côté point d'accès selon un exemple de mise en œuvre.

Selon l'exemple précédent de la première colonne du tableau, l'identifiant attribué au point d'accès, identifiant personnel et unique i.e. l'identifiant propre, a pour valeur 2, valeur prise parmi 10 valeurs du groupe d'identifiants des points d'accès. Et l'identifiant attribué au casque, identifiant personnel et unique, a pour valeur 1, valeur prise parmi 2 valeurs du groupe d'identifiants des casques. Un casque peut uniquement transmettre son identifiant personnel, ou un identifiant compris dans l'ensemble des identifiants d'appairage ou l'identifiant du point d'accès avec lequel le casque est appairé. Un point d'accès peut uniquement transmettre son identifiant personnel, ou un identifiant compris dans l'ensemble des identifiants d'appairage ou l'identifiant du casque avec lequel le point d'accès est appairé.

Appairage côté casque

En référence à la [Fig.3], le lancement du processus d'appairage, start, peut correspondre au moment où le casque est basculé du mode veille (idle) au mode en fonctionnement.

Dans une première étape, Set ID to UT$_M$, le casque met à jour son identifiant, l'identifiant prends la valeur de l'identifiant personnel du casque, 1 selon l'exemple. Cet identifiant est transmis par la couronne de LED, TagB, du casque.

Dans une deuxième étape, le casque via sa caméra grossière détecte les différents flux lumineux provenant des différentes couronnes de LED, TagA, ... des différents points d'accès installés dans le hall que sa matrice de photodétecteurs reçoit. Le casque identifie les identifiants des points d'accès détectés, GET APs ID. Parmi ces points d'accès détectés le casque détermine ceux qui sont libres $ID \in AP\ ID\ pool$ et ceux qui sont appairés $OR\ AP\ ID = UT_M$. Un point d'accès libre transmet un identifiant de valeur prise parmi l'ensemble des valeurs d'identifiants réservées aux points d'accès, ensemble de 10 valeurs selon l'exemple. Si un point d'accès n'est pas libre alors il peut déjà être appairé et l'identifiant qu'il transmet est celui d'un casque, $AP\ ID = UT_M$. Le casque 0 peut déjà être appairé avec un point d'accès et dans ce cas l'identifiant transmis par ce point d'accès est celui du casque, par exemple si le casque est appairé avec le point d'accès 3 alors le casque transmet l'identifiant 3 et le point d'accès transmet l'identifiant 0.

Suite à la deuxième étape, le casque effectue un premier test : tous les points d'accès détectés sont-ils occupés i.e non libres, AP ID Nb=0 ? Si aucun des points d'accès détectés n'est libre, la réponse au test est positive, alors le processus reboucle sur la deuxième étape, le casque poursuit sa détection d'un point d'accès. Si au moins un point d'accès est disponible i.e un des identifiants de points d'accès détectés appartient au groupe d'identifiants de points d'accès, la réponse au test est négative, le processus passe à une troisième étape.

Au cours de cette troisième étape, le casque sélectionne le meilleur point d'accès parmi les points d'accès détectés libres, Select Best AP. La caméra grossière du casque couvre un certain champ de vision (field of view). Dans ce champ, elle peut détecter et identifier plusieurs points d'accès libres c'est-à-dire que la caméra grossière peut recevoir avec son capteur, par exemple une matrice de détecteurs optiques, plusieurs flux formant chacun une couronne ou une partie de couronne. Selon la position des couronnes ou partie de couronnes sur son capteur, la caméra grossière peut identifier celle des couronnes ou partie de couronnes la plus proche de son centre. Le casque qui reçoit via sa caméra grossière le flux transmis par cette couronne ou partie de couronne peut décoder l'identifiant transmis par cette couronne pour déterminer le point d'accès correspondant parmi les différents points d'accès détectés, c'est-à-dire le point d'accès libre le plus proche.

Le casque effectue un deuxième test : l'identifiant du point d'accès libre le plus proche change-t-il, AP ID changed ? Bien que ce test apparaisse après la troisième étape, il peut se dérouler de manière concomitante à cette troisième étape et de manière générale pendant tout le procédé d'appairage. Le casque détermine via ce test si l'identifiant du point d'accès libre le plus proche change au cours d'une certaine durée. Ainsi, en comparant au bout d'une certaine durée l'identifiant du point d'accès libre le plus proche détecté avec celui détecté au début de cette durée, le procédé peut ne pas tenir compte de changements d'identifiant qui pourraient être dus à des allers retours de l'utilisateur.

Si le résultat du deuxième test est négatif, i.e. l'identifiant du point d'accès libre le plus proche n'a pas changé, le casque passe à une huitième étape.

Si le résultat du deuxième test est positif, i.e. l'identifiant du point d'accès libre le plus proche a changé, il y a passage dans un processus d'appairage, le casque passe à une quatrième étape. Ce changement peut correspondre à un besoin de basculement (handover) d'un premier point d'accès à un autre point d'accès du fait par exemple d'un éloignement du casque vis-à-vis du premier point d'accès avec lequel il est appairé comme illustré pour le casque UT1 de la [Fig.1] qui s'éloigne du point d'accès AP2 et tente de basculer sur le point d'accès AP1.

Dans une quatrième étape, le casque change son identifiant transmis par sa couronne de LED pour lui donner la valeur d'association correspondant à ce point d'accès libre le plus proche, Set ID to $UT_M/AP_N$, selon l'exemple en prenant la valeur, entre 12 et 31, qui indique que le casque 1 tente de s'appairer avec le point d'accès 2.

Le casque poursuit, cinquième étape, Get AP ID, sa détection de l'identifiant de ce point d'accès libre le plus proche tant que ce point d'accès n'a pas confirmé son appairage avec le casque en prenant l'identifiant du casque, $UT_m$ ID, selon l'exemple en basculant de l'identifiant 2 à l'identifiant 1.

Le casque effectue un troisième test, $AP\ ID = UT_M$ ? : l'identifiant transmis par ce point d'accès est-il changé en la valeur de l'identifiant personnel du casque pour confirmer ou pas l'appairage entre le casque et ce point d'accès. Selon l'exemple, ceci revient à tester si l'identifiant transmis par le point d'accès est passé de 2 à 1, l'identifiant personnel du casque.

La détection du changement peut être associée à une temporisation, Time out ?, pour reboucler sur la cinquième étape pendant cette temporisation tant qu'il n'y a pas de changement de détecté.

Si à l'issue de la temporisation le point d'accès n'a pas confirmé l'appairage, le casque reboucle à la première étape.

Si le résultat du troisième test est positif, i.e. l'identifiant du point d'accès a pris la valeur de l'identifiant personnel du casque signifiant l'acceptation par le point d'accès de l'appairage avec le casque, le casque passe à la sixième étape.

Lors de la sixième étape, Update mirror cmd, le casque détermine à l'aide de la détection de caméra grossière les angles grossiers de rotation à appliquer au miroir du casque pour amener la couronne provenant du point d'accès ayant accepté l'appairage au centre de la matrice de réception de la caméra grossière.

Lors de la septième étape, le casque informe le point d'accès de son appairage au point d'accès en mettant à jour son identifiant avec la valeur de l'identifiant du point d'accès, Set ID to $AP_N$. Selon l'exemple, l'identifiant affiché par le casque avait pour valeur la valeur d'association $UT_1/AP_2$. Pour signifier son appairage, l'identifiant affiché par le casque prend la valeur 2 qui correspond à l'identifiant personnel du point d'accès.

Le casque peut en outre déterminer, étape huit, Get Fine error, à l'aide de la détection de sa caméra fine les angles fins de rotation à appliquer au miroir du casque pour amener plus précisément la couronne provenant du point d'accès avec lequel le casque est appairé au centre de la matrice de réception de la caméra fine. Cette étape permet en outre de maintenir la centralisation du flux optique en cas de déplacement de l'utilisateur.

Le casque pilote la rotation du miroir avec les angles fins de rotation, étape neuf, Update mirror cmd.

Une fois la rotation accomplie, le procédé d'appairage mis en œuvre par le casque reboucle à la deuxième étape.

Ce procédé permet à l'utilisateur de se déplacer dans le hall tout en conservant une communication ininterrompue entre le casque et le serveur grâce à un basculement de l'appairage d'un point d'accès à un autre.

Appairage côté point d'accès

Le lancement du processus d'appairage, start, peut correspondre au moment où le point d'accès est basculé du mode veille (idle) au mode en fonctionnement. La caméra grossière de chaque point d'accès détecte les différentes couronnes de LED, TagB, ... des différents casques présents dans son champ de vue (couverture).

Dans une première étape, Set ID to AP$_N$, le point d'accès met à jour son identifiant l'identifiant prends la valeur de l'identifiant personnel du point d'accès, valeur 2 selon l'exemple prise parmi un ensemble de 10 valeurs. Cet identifiant est transmis par la couronne de LED, TagA, du point d'accès.

Dans une deuxième étape, le point d'accès via sa caméra grossière reçoit les différents flux lumineux provenant des différentes couronnes de LED, TagB, ... des différents casques présents dans le hall et présents dans sa couverture. Le point d'accès identifie, GET UTs ID, les identifiants des casques détectés.

Parmi ceux-ci le point d'accès AP détermine si un casque est en cours d'appairage avec lui lors d'un premier test, UT ID= UTx/ AP$_N$?, soit pour l'exemple l'identifiant du groupe d'identifiants d'appairage correspondant au couple UT$_1$/ AP$_2$.

Si le résultat du premier test est négatif, i.e. l'identifiant du casque n'est pas celui indiquant un appairage en cours avec le point d'accès alors le procédé effectue un deuxième test, UT ID= AP$_N$?, pour déterminer si le casque est déjà appairé avec le point d'accès AP$_N$, selon l'exemple UT ID=1 ?

Si le résultat du deuxième test est positif, i.e. l'identifiant du casque est celui du point d'accès, le casque est déjà appairé au point d'accès, alors le procédé passe à la cinquième étape (Get fine error).

Si le résultat du deuxième test est négatif, i.e. l'identifiant du casque n'est pas celui du point d'accès, le casque n'est pas déjà appairé avec ce point d'accès, le casque vient de se desappairer ou bien il est en cours d'appairage ou est déjà appairé avec un autre point d'accès alors le procédé retourne à la deuxième étape.

Si le résultat du premier test est positif, i.e. l'identifiant du casque est celui indiquant un appairage en cours avec le point d'accès, alors le procédé effectue un troisième test, New UT ?, pour déterminer si cet identifiant de casque en cours d'appairage n'a pas changé depuis un certain temps. Ainsi, en comparant au bout d'une certaine durée l'identifiant du casque en cours d'appairage avec celui au début de cette durée, le procédé peut ne pas tenir compte de changements d'identifiants de casque qui pourraient être dus à des allers retours de l'utilisateur.

Si le résultat du troisième test est négatif i.e. l'identifiant du casque en cours d'appairage n'a pas changé depuis le certain temps, passe à la cinquième étape (Get fine error).

Si le résultat du troisième test est positif, i.e. l'identifiant du casque en cours d'appairage a changé depuis le certain temps, le point d'accès détermine, Update mirror cmd, troisième étape, à l'aide du détecteur de sa caméra grossière, par exemple une matrice de détecteurs optiques, les angles grossiers de rotation à appliquer à son miroir pour amener la couronne provenant du casque au centre de la matrice de réception de la caméra grossière.

Le point d'accès informe le casque de son accord à l'appairage en mettant à jour l'identifiant qu'il transmet, quatrième étape, Set ID to UT$_M$. L'identifiant transmis par le point d'accès prend la valeur de l'identifiant du casque, et passe donc de la valeur 2 à la valeur 1 selon l'exemple.

Lors de la cinquième étape, le point d'accès détermine, Get Fine error, à l'aide de la détection de caméra fine les angles fins de rotation à appliquer à son miroir pour amener la couronne provenant du casque au centre de la matrice de réception de la caméra fine.

Le point d'accès pilote la rotation du miroir avec les angles fins de rotation, étape six, Update mirror cmd.

Une fois la rotation accomplie, le procédé d'appairage mis en œuvre par le point d'accès reboucle à la deuxième étape.

Localisation du casque

La [Fig.5] est un schéma d'un hall utilisé pour une utilisation de l'invention dans un contexte d'application de réalité virtuelle.

Le hall comporte un sol solH, un plafond PlafH, un mur de fond MufH, un mur gauche MugH, un mur droit MudtH et un mur devant MudH. Un seul point d'accès AP et un seul casque UT sont représentés dans ce hall pour simplifier la description. Bien entendu le hall peut être équipé avec plusieurs points d'accès et plusieurs utilisateurs munis chacun d'un casque peuvent être présents simultanément dans le hall et ce qui est décrit pour un point d'accès ou un casque s'applique aux autres points d'accès et casques. Chaque utilisateur pénètre et sort du hall indépendamment des autres utilisateurs ou de manière simultanée. Un angle du hall est considéré comme l'origine O d'un repère cartésien orthogonal constitué d'un plan horizontal, par exemple le sol SolH, et d'un axe vertical, par exemple le long du mur gauche MugH. Les coordonnées $(x_A, y_A, z_A)$ du point d'accès sont connues dans ce repère.

Les angles d'inclinaison du miroir MA du point d'accès permettent de connaître la direction du flux optique émanant du point d'accès et dirigé par exemple vers le casque UT (User terminal). La projection de ce flux optique sur le plan du plafond PlafH fait un angle $\theta$ par rapport à un plan vertical parallèle au mur du fond MufH, cet angle $\theta$ est en correspondance direct avec les angles d'inclinaisons du miroir. La projection de ce flux optique sur un plan vertical parallèle au mur de gauche MugH et passant par le point d'accès fait un angle $\beta$ par rapport à la verticale. L'angle $\alpha$ du flux optique par rapport à un plan horizontal passant par le casque se déduit de l'angle $\beta$ : $\alpha = 90 - \beta$. Connaissant la hauteur du casque depuis le sol et la hauteur à laquelle est positionné le point d'accès depuis le sol, il est donc possible de déterminer la hauteur relative h entre le casque et le point d'accès.

Ainsi, il est possible de déterminer la distance *d* du casque à l'aplomb du point d'accès sur le plan horizontal passant par le casque : *d = h* / tan$\alpha$

En projetant le flux optique sur le plan horizontal SolH, il est possible de déterminer l'abscisse $x_U$ et l'ordonnée $y_U$ du casque dans le repère cartésien orthogonal :

$$x_U = x_A - d\cos\theta$$

$$y_U = y_A - d\sin\theta$$

Connaissant la coordonnée $z_A$ du point d'accès et la hauteur relative h entre le casque et le point d'accès, il est possible de déterminer la coordonnée $z_U$ du casque :

$$z_U = z_A - h$$

La connaissance des coordonnées $(x_U, y_U, z_U)$ donne précisément la localisation du casque UT dans le repère cartésien orthogonal.

Le point d'accès peut calculer les coordonnées du casque $(x_U, y_U, z_U)$ à partir de sa connaissance de ses coordonnées $(x_A, y_A, z_A)$, des angles d'inclinaison de son miroir qui lui donnent les angles $\alpha$ et $\theta$ et de h.

Selon un mode de réalisation, le casque peut transmettre ses coordonnées $(x_U, y_U, z_U)$ au serveur de données pour que celui-ci modifie les données de réalité virtuelle destinées au casque en les adaptant à la localisation du casque. Ainsi, l'utilisateur du casque peut bénéficier d'un affichage de données virtuelles adaptées à sa localisation. En changeant de position, l'utilisateur peut ainsi interagir avec l'application de réalité virtuelle et obtenir des données affichées qui tiennent compte de sa position.

Selon un autre mode de réalisation, le point d'accès peut transmettre les coordonnées $(x_U, y_U, z_U)$ au casque. Celui-ci peut lui-même adapter les données de réalité virtuelle reçue à sa localisation.

## Revendications

1. Procédé (10) de communication optique de données entre un premier équipement (AP) de télécommunication dont la localisation est connue et un deuxième équipement (UT) de télécommunication, le premier équipement (AP) étant équipé d'une fibre optique (FA) transportant un rayon lumineux et d'un miroir amovible (MA) piloté par un microprocesseur pour diriger le rayon lumineux en sortie de la fibre optique (FA) dans une première direction, et étant équipé d'une matrice photoréceptrice (CAMA1, CAMA2) pour recevoir un flux lumineux transportant un identifiant provenant du deuxième équipement (UT) et pour déterminer une direction de réception, comprenant

   - piloter le miroir amovible (MA) par le microprocesseur pour aligner la première direction avec la direction de réception et

   **caractérisé en ce qu'**il comprend en outre :

   - déterminer par le microprocesseur la localisation du deuxième équipement (UT) connaissant la localisation du premier équipement (AP), la hauteur relative entre les deux équipements (AP, UT) et les angles d'inclinaison verticale et horizontale du miroir amovible (MA).

2. Procédé (10) de communication optique de données selon la revendication 1, tel que le pilotage de l'orientation du miroir amovible est asservi à un indicateur de qualité de communication entre le premier équipement et le deuxième équipement pour suivre un déplacement de ce deuxième équipement.

3. Procédé (10) de communication optique de données selon l'une des revendications 1 et 2, tel que la détermination de la localisation est effectuée selon une certaine cadence.

4. Procédé (10) de communication optique de données selon l'une des revendications 1 à 3, tel qu'il comprend en outre :

- communication au deuxième équipement de sa localisation.

5. Procédé (10) de communication optique de données selon l'une des revendications 1 à 4, tel que le deuxième équipement est un casque de réalité virtuelle utilisant des données de réalité virtuelle et en ce qu'il comprend en outre :

- prise en compte de la localisation du casque pour adapter les données de réalité virtuelle utilisées par le casque.

6. Procédé (10) de communication optique de données selon la revendication précédente, telle que la détermination de la hauteur relative entre les deux équipements tient compte de la taille d'un utilisateur du casque.

7. Procédé (10) de communication optique de données selon l'une des revendications 1 à 3, tel que le deuxième équipement est un casque de réalité virtuelle utilisant des données de réalité virtuelle et en ce qu'il comprend en outre :

- communication à un serveur de données de réalité virtuelle de la localisation d'au moins ce casque,
- communication à au moins ce casque de données de réalité virtuelle adaptées par le serveur en fonction de la localisation d'au moins ce casque.

8. Procédé (10) de communication optique de données selon l'une des revendications 1 à 7, le premier équipement étant pris parmi plusieurs premiers équipements (AP) de télécommunication dont la localisation est connue et le deuxième équipement étant pris parmi plusieurs deuxièmes équipements (UT) de télécommunication, chaque équipement étant équipé d'une fibre optique (FA, FB) transportant un rayon lumineux et d'un miroir amovible (MA, MB) piloté par un microprocesseur pour diriger le rayon lumineux en sortie de la fibre optique dans une première direction, et étant équipé d'une matrice photoréceptrice (CAMA1, CAMA2, CAMB1, CAMB2) pour recevoir un flux lumineux transportant un identifiant provenant d'un autre équipement pris parmi les premiers et deuxièmes équipements (UT) et pour déterminer une direction de réception, comprenant :

- aligner pour chacun des premiers équipements la première direction avec la direction de réception en pilotant le miroir amovible par le microprocesseur,
- détermination par chaque premier équipement parmi les plusieurs premiers équipements (AP) de la localisation d'un deuxième équipement parmi les plusieurs deuxièmes équipements connaissant la localisation du premier équipement, la hauteur relative entre ces deux équipements et des angles d'inclinaison vertical et horizontal du miroir amovible du premier équipement.

9. Procédé (10) de communication selon la revendication 8, les premiers équipements et les deuxièmes équipements étant équipés chacun d'un émetteur directif d'un identifiant, comprenant en outre :

- distinction de plusieurs groupes d'identifiants dont un premier groupe d'identifiants propres attribués respectivement à des premiers équipements (AP), un deuxième groupe d'identifiants propres attribués respectivement à des deuxièmes équipements et un troisième groupe d'identifiants pour des couples deuxième équipement/premier équipement en cours d'appairage,
- transmission directive d'un flux lumineux par un émetteur directif d'au moins un des équipements parmi les premiers et deuxièmes équipements portant un identifiant transmis dont la valeur est prise dans un des groupes en fonction de son état.

10. Procédé (10) de communication optique de données selon la revendication 9 tel qu'un équipement libre transmet son identifiant propre.

11. Procédé (10) de communication optique de données selon la revendication 9, tel qu'un équipement non libre transmet un identifiant différent de son identifiant propre.

12. Procédé (10) de communication optique de données selon la revendication 11, tel qu'un premier équipement (AP) appairé avec un deuxième équipement transmet l'identifiant du deuxième équipement.

13. Procédé (10) de communication optique de données selon la revendication 11, tel qu'un premier équipement (AP) en cours d'appairage avec un deuxième équipement transmet l'identifiant pris dans le troisième groupe qui correspond au couple deuxième équipement/premier équipement.

14. Equipement (AP) de télécommunication, dont la localisation est connue, destiné à communiquer avec un deuxième équipement (UT) de télécommunication l'équipement (AP) de télécommunication comprenant:

- une fibre optique (FA) transportant un rayon lumineux,
- un miroir amovible (MA) piloté,
- un microprocesseur pour piloter l'orientation du miroir amovible (MA) selon des angles d'inclinaison verticale et horizontale pour diriger le rayon lumineux en sortie de la fibre optique (FA) dans une première direction,
- une matrice photoréceptrice (CAMA1, CAMA2) pour recevoir un flux lumineux transportant un identifiant provenant d'une source émettrice associée au deuxième équipement, qui est un casque, et pour déterminer une direction de réception, et tel que le microprocesseur pilote l'orientation du miroir amovible (MA) pour aligner la première direction avec la direction de réception et pour déterminer la localisation du deuxième équipement (UT) connaissant la localisation de l'équipement (AP), la hauteur relative entre les deux équipements (UT, AP) et les angles d'inclinaison verticale et horizontale du miroir amovible (MA).

15. Système de communication optique de données comprenant un premier équipement (AP) de télécommunication dont la localisation est connue et un deuxième équipement (UT) de télécommunication, le premier équipement (AP) comprenant :

- une première fibre optique (FA) transportant un rayon lumineux,
- un premier miroir amovible (MA),
- un premier microprocesseur pour piloter l'orientation du premier miroir amovible selon des angles d'inclinaison verticale et horizontale pour diriger le rayon lumineux en sortie de la première fibre optique (FA) dans une première direction,
- une première matrice photoréceptrice (CAMA1, CAMA2) pour recevoir un flux lumineux transportant un identifiant provenant d'une source émettrice associée au deuxième équipement (UT) et pour déterminer une première direction de réception, le deuxième équipement (UT) comprenant :
- une deuxième fibre optique (FB) transportant un rayon lumineux,
- un deuxième miroir amovible (MB),
- un deuxième microprocesseur pour piloter l'orientation du deuxième miroir amovible (MB) selon des angles d'inclinaison verticale et horizontale pour diriger le rayon lumineux en sortie de la deuxième fibre optique (FB) dans une deuxième direction,
- une deuxième matrice photoréceptrice (CAMB1, CAMB2) pour recevoir un flux lumineux transportant un identifiant provenant d'une source émettrice associée au premier équipement (AP) et pour déterminer une deuxième direction de réception, le premier microprocesseur pilotant l'orientation du premier miroir amovible (MA) pour aligner la première direction avec la première direction de réception, et le deuxième microprocesseur pilotant l'orientation du deuxième miroir amovible (MB) pour aligner la deuxième direction avec la deuxième direction de réception, le système est tel que le premier microprocesseur détermine la localisation du deuxième équipement (UT) connaissant la localisation du premier équipement (AP), la hauteur relative entre les deux équipements (UT, AP) et les angles d'inclinaison verticale et horizontale du premier miroir amovible (MA).

**Patentansprüche**

1. Verfahren (10) zur optischen Datenübertragung zwischen einer ersten Telekommunikationseinrichtung (AP), deren Standort bekannt ist, und einer zweiten Telekommunikationseinrichtung (UT), wobei die erste Einrichtung (AP) mit einer einen Lichtstrahl transportierenden optischen Faser (FA) und einem durch einen Mikroprozessor gesteuerten beweglichen Spiegel (MA) ausgestattet ist, um den Lichtstrahl am Ausgang der optischen Faser (FA) in eine erste Richtung zu lenken, und mit einer Fotorezeptormatrix (CAMA1, CAMA2) zum Empfangen eines Lichtstroms, der eine Kennung von der zweiten Einrichtung (UT) transportiert, und zum Bestimmen einer Empfangsrichtung, das Folgendes aufweist:

- Steuern des beweglichen Spiegels (MA) durch den Mikroprozessor, um die erste Richtung mit der Empfangsrichtung auszurichten, und

**dadurch gekennzeichnet, dass** es darüber hinaus Folgendes aufweist:

- Bestimmen des Standorts der zweiten Einrichtung (UT) durch den Mikroprozessor unter Berücksichtigung des Standorts der ersten Einrichtung (AP), der relativen Höhe zwischen den beiden Einrichtungen (AP, UT) und des vertikalen und horizontalen Neigungswinkels des beweglichen Spiegels (MA).

**2.** Verfahren (10) zur optischen Datenübertragung nach Anspruch 1, wobei die Steuerung der Ausrichtung des beweglichen Spiegels von einem Indikator für die Kommunikationsqualität zwischen der ersten Einrichtung und der zweiten Einrichtung abhängig ist, um einer Bewegung dieser zweiten Einrichtung zu folgen.

**3.** Verfahren (10) zur optischen Datenübertragung nach einem der Ansprüche 1 und 2, wobei die Standortbestimmung in bestimmten Zeitabständen erfolgt.

**4.** Verfahren (10) zur optischen Datenübertragung nach einem der Ansprüche 1 bis 3, das darüber hinaus Folgendes aufweist:

- Kommunikation mit der zweiten Einrichtung seines Standorts.

**5.** Verfahren (10) zur optischen Datenübertragung nach einem der Ansprüche 1 bis 4, wobei die zweite Einrichtung ein Virtual-Reality-Headset ist, das Virtual-Reality-Daten verwendet, und wobei es darüber hinaus Folgendes aufweist:

- Berücksichtigung des Standorts des Headsets, um die vom Headset verwendeten Virtual-Reality-Daten anzupassen.

**6.** Verfahren (10) zur optischen Datenübertragung nach dem vorhergehenden Anspruch, wobei die Bestimmung der relativen Höhe zwischen den beiden Einrichtungen die Größe eines Benutzers des Headsets berücksichtigt.

**7.** Verfahren (10) zur optischen Datenübertragung nach einem der Ansprüche 1 bis 3, wobei die zweite Einrichtung ein Virtual-Reality-Headset ist, das Virtual-Reality-Daten verwendet, und wobei es darüber hinaus Folgendes aufweist:

- Übermittlung des Standorts mindestens dieses Headsets an einen Virtual-Reality-Datenserver,
- Kommunikation mit mindestens diesem Virtual-Reality-Headset, das vom Server entsprechend dem Standort mindestens dieses Headsets angepasst wurde.

**8.** Verfahren (10) zur optischen Datenübertragung nach einem der Ansprüche 1 bis 7, wobei die erste Einrichtung aus mehreren ersten Telekommunikationseinrichtungen (AP) ausgewählt wird, deren Standort bekannt ist, und die zweite Einrichtung aus mehreren zweiten Telekommunikationseinrichtungen (UT) ausgewählt wird, wobei jede Einrichtung mit einer einen Lichtstrahl transportierenden optischen Faser (FA, FB) und einem durch einen Mikroprozessor gesteuerten beweglichen Spiegel (MA, MB) ausgestattet ist, um den Lichtstrahl am Ausgang der optischen Faser (FA) in eine erste Richtung zu lenken, und mit einer Fotorezeptormatrix (CAMA1, CAMA2, CAMB1, CAMB2) zum Empfangen eines Lichtstroms, der eine Kennung von einer anderen Einrichtung aus den ersten und zweiten Einrichtungen (UT) transportiert, und zum Bestimmen einer Empfangsrichtung, das Folgendes aufweist:

- für jede der ersten Ausrüstungen das Ausrichten der ersten Richtung mit der Empfangsrichtung, indem der bewegliche Spiegel durch den Mikroprozessor gesteuert wird,
- Bestimmen des Standorts einer zweiten Einrichtung unter den mehreren zweiten Einrichtungen, die den Standort der ersten Einrichtung kennen, der relativen Höhe zwischen diesen beiden Einrichtungen und des vertikalen und horizontalen Neigungswinkels des beweglichen Spiegels der ersten Einrichtung durch jede erste Einrichtung unter den mehreren ersten Einrichtungen (AP).

**9.** Verfahren (10) zur optischen Datenübertragung nach Anspruch 8, wobei die ersten Einrichtungen und die zweiten Einrichtungen jeweils mit einem Richtsender einer Kennung ausgestattet sind, und es darüber hinaus Folgendes aufweist:

- Unterscheiden mehrerer Kennungsgruppen, darunter eine erste Gruppe eigener Kennungen, die jeweils ersten Einrichtungen (AP) zugewiesen sind, eine zweite Gruppe eigener Kennungen, die jeweils zweiten Einrichtungen zugewiesen sind, und eine dritte Gruppe von Kennungen für zweite Einrichtungen/erste Einrichtungen, die gerade eine Kopplung durchführen,
- gerichtetes Übertragen eines Lichtstroms durch einen Richtsender von mindestens einer der ersten und zweiten Einrichtungen, die eine übertragene Kennung tragen, deren Wert je nach ihrem Zustand aus einer der Gruppen entnommen wird.

**10.** Verfahren (10) zur optischen Datenübertragung nach Anspruch 9, wobei eine freie Einrichtung ihre eigene Kennung überträgt.

11. Verfahren (10) zur optischen Datenübertragung nach Anspruch 9, wobei eine nicht freie Einrichtung eine Kennung überträgt, die sich von ihrer eigenen Kennung unterscheidet.

12. Verfahren (10) zur optischen Datenübertragung nach Anspruch 11, wobei eine erste Einrichtung (AP), die mit einer zweiten Einrichtung gekoppelt ist, die Kennung der zweiten Einrichtung überträgt.

13. Verfahren (10) zur optischen Datenübertragung nach Anspruch 11, wobei eine erste Einrichtung (AP), die gerade mit einer zweiten Einrichtung gekoppelt wird, die Kennung aus der dritten Gruppe überträgt, die dem Paar aus zweiter Einrichtung und erster Einrichtung entspricht.

14. Telekommunikationseinrichtung (AP) mit bekanntem Standort, die zur Kommunikation mit einer zweiten Telekommunikationseinrichtung (UT) bestimmt ist, wobei die Telekommunikationseinrichtung (AP) Folgendes aufweist:

- eine optische Faser (GF), die einen Lichtstrahl transportiert,
- einen gesteuerten beweglichen Spiegel (MA),
- einen Mikroprozessor zur Steuerung der Ausrichtung des beweglichen Spiegels (MA) entsprechend dem vertikalen und horizontalen Neigungswinkel, um den aus der optischen Faser (FA) austretenden Lichtstrahl in eine erste Richtung zu lenken,
- eine Fotorezeptormatrix (CAMA1, CAMA2) zum Empfangen eines Lichtstroms, der eine Kennung von einer mit der zweiten Einrichtung, bei der es sich um ein Headset handelt, verbundenen Sendequelle transportiert, und zum Bestimmen einer Empfangsrichtung, und wobei der Mikroprozessor die Ausrichtung des beweglichen Spiegels (MA) steuert, um die erste Richtung mit der Empfangsrichtung auszurichten und um den Standort der zweiten Telekommunikationseinrichtung (UT) zu bestimmen, wobei der Standort der Einrichtung (AP), die relative Höhe zwischen den beiden Einrichtungen (UT, AP) und der vertikale und horizontale Neigungswinkel des beweglichen Spiegels (MA) bekannt sind.

15. System zur optischen Datenübertragung mit einer ersten Telekommunikationseinrichtung (AP), deren Standort bekannt ist, und einer zweiten Telekommunikationseinrichtung (UT), wobei die erste Einrichtung (AP) Folgendes aufweist:

- eine erste optische Faser (FA), die einen Lichtstrahl transportiert,
- einen ersten beweglichen Spiegel (MA),
- einen ersten Mikroprozessor zur Steuerung der Ausrichtung des ersten beweglichen Spiegels entsprechend dem vertikalen und horizontalen Neigungswinkel, um den aus der ersten optischen Faser (FA) austretenden Lichtstrahl in eine erste Richtung zu lenken,
- eine erste Fotorezeptormatrix (CAMA1, CAMA2) zum Empfangen eines Lichtstroms, der eine Kennung von einer mit der zweiten Einrichtung (UT) verbundenen Sendequelle transportiert, und zum Bestimmen einer ersten Empfangsrichtung,

wobei die zweite Einrichtung (UT) Folgendes aufweist:

- eine zweite optische Faser (FB), die einen Lichtstrahl transportiert,
- einen zweiten beweglichen Spiegel (MB),
- einen zweiten Mikroprozessor zur Steuerung der Ausrichtung des zweiten beweglichen Spiegels (MB) entsprechend dem vertikalen und horizontalen Neigungswinkel, um den aus der zweiten optischen Faser (FB) austretenden Lichtstrahl in eine zweite Richtung zu lenken,
- eine zweite Fotorezeptormatrix (CAMB1, CAMB2) zum Empfangen eines Lichtstroms, der eine Kennung von einer mit der ersten Einrichtung (AP) verbundenen Sendequelle transportiert, und zum Bestimmen einer zweiten Empfangsrichtung,

wobei der erste Mikroprozessor die Ausrichtung des ersten beweglichen Spiegels (MA) steuert, um die erste Richtung mit der ersten Empfangsrichtung auszurichten, und der zweite Mikroprozessor die Ausrichtung des zweiten beweglichen Spiegels (MB) steuert, um die zweite Richtung mit der zweiten Empfangsrichtung auszurichten,

wobei das System so ausgelegt ist, dass der erste Mikroprozessor den Standort der zweiten Einrichtung (UT) unter Berücksichtigung des Standorts der ersten Einrichtung (AP), der relativen Höhe zwischen den beiden Einrichtungen (UT, AP) und des vertikalen und horizontalen Neigungswinkels des ersten beweglichen Spiegels (MA) bestimmt.

**EP 4 453 693 B1**

**Claims**

1. Method (10) for optical data communication between a first telecommunications equipment (AP) the location of which is known and a second telecommunications equipment (UT), the first equipment (AP) being equipped with an optical fibre (FA) carrying a light beam and with a movable mirror (MA) driven by a microprocessor so as to direct the light beam at the output of the optical fibre (FA) in a first direction, and being equipped with a photoreceiver array (CAMA1, CAMA2) for receiving a luminous flux carrying an identifier from the second equipment (UT) and for determining a direction of reception, comprising

   - using the microprocessor to drive the movable mirror (MA) so as to align the first direction with the direction of reception and

   **characterized in that** it furthermore comprises:

   - using the microprocessor to determine the location of the second equipment (UT), knowing the location of the first equipment (AP), the relative height between the two equipments (AP, UT) and the vertical and horizontal tilt angles of the movable mirror (MA).

2. Method (10) for optical data communication according to Claim 1, such that the driving of the orientation of the movable mirror is slaved to an indicator of the quality of communication between the first equipment and the second equipment so as to track a movement of this second equipment.

3. Method (10) for optical data communication according to either of Claims 1 and 2, such that the location is determined at a certain rate.

4. Method (10) for optical data communication according to one of Claims 1 to 3, such that it furthermore comprises:

   - the second equipment having its location communicated to it.

5. Method (10) for optical data communication according to one of Claims 1 to 4, such that the second equipment is a virtual reality headset using virtual reality data, and in that it furthermore comprises:

   - taking into account the location of the headset in order to adapt the virtual reality data used by the headset.

6. Method (10) for optical data communication according to the preceding claim, such that the determination of the relative height between the two equipments takes into account the height of a user of the headset.

7. Method (10) for optical data communication according to one of Claims 1 to 3, such that the second equipment is a virtual reality headset using virtual reality data, and in that it furthermore comprises:

   - communicating the location of at least this headset to a virtual reality data server,
   - communicating, to at least this headset, virtual reality data adapted by the server on the basis of the location of at least this headset.

8. Method (10) for optical data communication according to one of Claims 1 to 7, the first equipment being taken from among multiple first telecommunications equipments (AP) the location of which is known and the second equipment being taken from among multiple second telecommunications equipments (UT), each equipment being equipped with an optical fibre (FA, FB) carrying a light beam and with a movable mirror (MA, MB) driven by a microprocessor so as to direct the light beam at the output of the optical fibre in a first direction, and being equipped with a photoreceiver array (CAMA1, CAMA2, CAMB1, CAMB2) for receiving a luminous flux carrying an identifier from another equipment taken from among the first and second equipments (UT) and for determining a direction of reception, comprising:

   - for each of the first equipments, aligning the first direction with the direction of reception by using the microprocessor to drive the movable mirror,
   - using each first equipment from among the multiple first equipments (AP) to determine the location of a second equipment from among the multiple second equipments, knowing the location of the first equipment, the relative height between these two equipments and vertical and horizontal tilt angles of the movable mirror of the first equipment.

9. Communication method (10) according to Claim 8, the first equipments and the second equipments each being equipped with a directional emitter of an identifier, furthermore comprising:

   - distinguishing multiple groups of identifiers, including a first group of specific identifiers assigned respectively to first equipments (AP), a second group of specific identifiers assigned respectively to second equipments and a third group of identifiers for second equipment/first equipment pairs in the process of pairing,
   - a directional emitter of at least one of the equipments from among the first and second equipments directionally transmitting a luminous flux carrying a transmitted identifier the value of which is taken from one of the groups according to its state.

10. Method (10) for optical data communication according to Claim 9, such that an available equipment transmits its own identifier.

11. Method (10) for optical data communication according to Claim 9, such that an unavailable equipment transmits an identifier other than its own identifier.

12. Method (10) for optical data communication according to Claim 11, such that a first equipment (AP) paired with a second equipment transmits the identifier of the second equipment.

13. Method (10) for optical data communication according to Claim 11, such that a first equipment (AP) in the process of pairing with a second equipment transmits the identifier taken from the third group that corresponds to the second equipment/first equipment pair.

14. Telecommunications equipment (AP) the location of which is known, the telecommunications equipment (AP) being intended to communicate with a second telecommunications equipment (UT), and comprising:

   - an optical fibre (FA) carrying a light beam,
   - a driven movable mirror (MA),
   - a microprocessor for driving the orientation of the movable mirror (MA) at vertical and horizontal tilt angles so as to direct the light beam at the output of the optical fibre (FA) in a first direction,
   - a photoreceiver array (CAMA1, CAMA2) for receiving a luminous flux carrying an identifier from an emitting source associated with the second equipment, which is a headset, and for determining a direction of reception, and such that the microprocessor drives the orientation of the movable mirror (MA) so as to align the first direction with the direction of reception and to determine the location of the second equipment (UT), knowing the location of the equipment (AP), the relative height between the two equipments (UT, AP) and the vertical and horizontal tilt angles of the movable mirror (MA) .

15. Optical data communication system comprising a first telecommunications equipment (AP) the location of which is known and a second telecommunications equipment (UT), the first equipment (AP) comprising:

   - a first optical fibre (FA) carrying a light beam,
   - a first movable mirror (MA),
   - a first microprocessor for driving the orientation of the first movable mirror at vertical and horizontal tilt angles so as to direct the light beam at the output of the first optical fibre (FA) in a first direction,
   - a first photoreceiver array (CAMA1, CAMA2) for receiving a luminous flux carrying an identifier from an emitting source associated with the second equipment (UT) and for determining a first direction of reception,

   the second equipment (UT) comprising:

   - a second optical fibre (FB) carrying a light beam,
   - a second movable mirror (MB),
   - a second microprocessor for driving the orientation of the second movable mirror (MB) at vertical and horizontal tilt angles so as to direct the light beam at the output of the second optical fibre (FB) in a second direction,
   - a second photoreceiver array (CAMB1, CAMB2) for receiving a luminous flux carrying an identifier from an emitting source associated with the first equipment (AP) and for determining a second direction of reception, the first microprocessor driving the orientation of the first movable mirror (MA) so as to align the first direction with the first direction of reception, and the second microprocessor driving the orientation of the second movable mirror (MB) so as to align the second direction with the second direction of reception,

the system is such that the first microprocessor determines the location of the second equipment (UT), knowing the location of the first equipment (AP), the relative height between the two equipments (UT, AP) and the vertical and horizontal tilt angles of the first movable mirror (MA).

EP 4 453 693 B1

[Fig. 1]

[Fig. 2]

17

[Fig. 3]

[Fig. 4]

[Fig. 5]

**RÉFÉRENCES CITÉES DANS LA DESCRIPTION**

**Documents brevets cités dans la description**

- FR 3081639 A1